# EUROPEAN PATENT SPECIFICATION

(11) **EP 2 670 109 B1**
(45) Date of publication and mention of the grant of the patent: **29.07.2015**
(21) Application number: 12382223.1
(22) Date of filing: 01.06.2012
(51) Int. Cl.: H04L 29/08, H04L 29/06

(54) **Method, system and devices for multimedia delivering in content delivery networks**
Verfahren, System und Vorrichtungen zur Multimediabereitstellung in Inhaltsbereitstellungsnetzwerken
Procédé, système et dispositifs de distribution multimédia dans des réseaux de distribution de contenu

(43) Date of publication of application: 04.12.2013
(73) Proprietor: ALCATEL LUCENT, 92100 Boulogne-Billancourt (FR)
(72) Inventor: Kisel, Andrey, Maidenhead, SL6 2PJ (GB); Ferguson, David, Cambridge, CB23 7AP (GB); Niven-Jenkins, Benjamin, Cambridge, CB4 0WG (GB); Villegas Nuñez, Alvaro, 28050 Madrid (ES)
(74) Representative: Sciaux, Edmond

(56) References cited:
- EP-A1- 1 617 591
- US-A1- 2007 005 771
- US-A1- 2011 191 404

## Description

### BACKGROUND OF THE INVENTION

### Technical field

The present invention relates to the delivery of multimedia contents (e.g., text, audio, video, software, etc., and any combination of them) in a content delivery network (CDN)

### Description of related art

A content delivery network or content distribution network (CDN) is a system of computers containing copies of data placed at various nodes of a network. When properly designed and implemented, a CDN can improve access to the data it caches by placing a number of copies closer to end users resulting in increased access bandwidth to the data, better scaling, resiliency and reduced latency. CDN contains surrogate servers with copies of multimedia, positioned at various network points so as to achieve optimal bandwidth and network utilization for clients accessing to the multimedia. Surrogate server (specified in RFC 3040 by IETF) is often referred to as delivery server, edge node, edge cache or just cache, too. Multimedia includes, but not limited to live and on-demand content. Data or media content types often cached in CDNs include multimedia objects (audio and video objects), web objects (text, graphics, URLs and scripts), downloadable objects (media files, software, documents), applications, live media (events), and database queries. Caching content means that data are stored in a surrogate server (i.e., a block of memory inside surrogate server for temporary storage of data likely to be used) so that future requests for that content can be served faster from a location closer to the consumer.

Growing volume of online live events and live channels require cost-efficient CDN scaling to deliver them. The scaling becomes even more crucial with the broad adoption of adaptive streaming technologies such as Apple Live Streaming (HLS), Adobe HTTP Dynamic Streaming (HDS), Microsoft Smooth Streaming and Dynamic Adaptive Streaming over HTTP (DASH) currently being developed under Motion Pictures Experts Group (MPEG) with different profiles. Adaptive streaming typically encodes video/audio into multiple bit-rate formats using common video/audio codecs such as H.264/AAC. The audio/video is then fragmented and stored in short media files or single fragmented file for multiple bit-rates. The rules for the player to retrieve file segments are kept in a manifest file. HTTP (Hypertext Transfer Protocol) is the common protocol for the delivery or adaptive delivery of live events and channels online to consumer devices. Note that in this context, the expresions "media segment" and "media object" are used interchangeably.

Inside CDN, a nominated surrogate server upon consumer request retrieves live segments (objects), delivers and caches for subsequent requests. The prior art approach often requires large upstream bandwidth, e.g. in the case that several surrogate servers request the same live objects from CDN appliance higher up in the network hierarchy and the same live media object is essentially being delivered several times over the same network link to meet requests from multiple downstream surrogate servers.

Such deficiency can be partially remediated by intelligent network design with several intermediate level of caching hierarchy. However, with the exponential growth of online live events and media, frequently changing content popularity often leading to different content distribution requirements, the top-down planned and managed approach is difficult to scale and slow to adapt to ever changing demand and popularity.

There are several shortcomings of the prior art solutions, which can be grouped and described as follows:
- The first group relates to the distribution of linear channels in the IPTV system. This solution is only partially applicable because linear channels are distributed via broadcast (IP multicast) all the way to the consumer devices. Note that broadcast means sending out communication or data simultaneously to a number of users, often via a single data stream or over a wide area.
   This traditional IPTV approach is based on top-down system provisioning, which does not scale well for large number of online events and channels because online events and channels are typically delivered over unicast delivery mechanism such as HTTP. Traditional IPTV approach requires network to support IP multicast delivery, which is not commonly available over the Internet. Consumer terminals have to be equipped with a special IP multicast receiver, which are not broadly available on the retail market. Instead, IPTV systems typically provide specialized consumer terminals (Set Top Boxed) capable of receiving IP multicast. Live channels are statically assigned to IP multicast addresses (groups) and consumer device joins multicast group upon selection of a live channel from the electronic program guide (EPG). The system requires minimal operator intervention after provisioning. Thus, this prior art approach in not applicable to online CDNs primarily for two reasons. Firstly, multicast is not often enabled in the core and access networks, especially in the access networks between surrogate server and consumer terminals, and crucially multicast enabled terminals are not available on the retail market for online content. Secondly, the solution relies on static provision and not well suited for flexible adaptation to changing consumer demand especially for adaptive rate delivery, which the second group of prior art solutions is trying to address.
- The second group of the prior art attempts to apply multicast distribution inside CDN for HTTP adaptive streaming. Early discussions on MPEG DASH mailing lists and inside other Standard Delivery Organisation are looking to create a multicast stream carrying segments or fragments of the same quality to CDN surrogate servers. The surrogate servers can then cache the segments and deliver them in unicast (HTTP) to the consumer terminal therefore addressing one of the limitations of the first prior art and reaching broad population of connected HTTP enabled terminals. There are two drawbacks of the last approach. Firstly, it places extra computation load on CDN surrogate servers, which often act as Web caches. Web caches typically cache HTTP requests, responses and response data for subsequent deliveries. However, when a segmented media is delivered to the surrogate server inside multicast stream (as suggested in MPEG DASH discussions on the mailing lists), the surrogate cannot function as a Web cache because it also need needs to know extra external information and perform computations, e.g. to learn to what HTTP request delivered media belongs, and what HTTP response and response headers it should include into the reply. Acquiring this information can degrade the performance of the surrogate servers, and limits their flexibility because they need to be aware of the contents of the objects they store and deliver; instead of acting as a simple cache device, which are currently deployed over in the Internet. The surrogate server would require to become an Origin server essentially serving media requests and creating responses instead of acting like a Web cache, which only caches content, requests and responses. Secondly, the issue of managing the system is still not being addressed, e.g. how the overall solution can dynamically adapt to the changing demand. In summary, multicast distribution disclosed in MPEG DASH is missing some core information for efficient cache operation and does not address dynamic adaptation and scaling.
- An approach to unidirectional delivery of files over Internet is described in RFC 3926 FLUTE protocol (File Delivery over Unidirectional Transport). This RFC describes how multiple large files or objects can be delivered via unidirectional (e.g. multicast) transport to many hosts using common delivery session. FLUTE can also be applied for continue segmented data. Similar to the discussion on the second prior art, FLUTE does not define how CDN can efficiently pre-fill surrogates for live events and linear channels, rather only specify transport mechanism to implement it. As such, purely multiplexing of several rates from adaptive rate live channels would suffer the limitations discussed above. More over, FLUTE does not intend to address the question of managing and improving efficiency of surrogates, e.g. dynamic adaptation to the changing popularity and demand.

Therfore, existing prior art solutions are either do not address or are not well suited for delivery of live events or linear channels over CDNs and especially Internet CDNs.

Relevant prior art documents are EP 1 617 591, US 2011 1914 04, US 2007 005 771.

### SUMMARY

In light of the present need for delivering multimedia in a content delivery network in a scalable way which allows efficient distribution of multimedia including live and linear contents (e.g., radio or TV channels), a brief summary of various exemplary embodiments is presented.

Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections. The present invention is well suited for multimedia delivery involved in CDN applications for live or linear online events because is based on creating broadcast channels or groups containing complete set of cacheable objects (media segments). In addition, this invention decentralises automated self-managed logic inside CDN for the creation and joining of said broadcast channels.

Broadcast channels are typically implemented in computer networks using multicast. However, the present invention is not limited to computer networks using multicast, and can be similarly applied to networks using other broadcast technologies, such as radio frequency or satellite transmission, in which case multicast and broadcast can be used interchangeably, e.g. multicast agent can be called broadcast agent.

The present invention is applicable to Internet and online CDNs because it allows a surrogate server to deliver cached objects to the consumer on any supported protocol, e.g. via HTTP adaptive streaming variants. Furthermore, this invention can also be applied for an online CDN even in the case that point to multi point distribution such as multicast is not available within the CDN.

According to an aspect of the invention a method is provided for multimedia content delivering, which comprises the following steps:
- receiving requests directed to a CDN for media objects (or media segments),
- checking whether the media objects have associated a web resource which is enabled to be multicast,
and, if a configurable threshold of requests is reached, the method further comprises the steps of:
- retrieving the requested media objects and subsequent media objects associated with the same web resource,
- retrieving a set of cacheable objects to serve the received media requests (e.g., cacheable objects comprise client requests associated with the media objects and server responses to these client requests),
- packaging the retrieved media objects and cacheable objects to serve the received media requests into a multicast channel,
- associating the multicast channel with the web resource,
- sending from the CDN a notification which includes response information in order to enable a decision on whether to use the multicast channel for delivering at least one of the retrieved media objects.

As explained before, in the context of this invention, the multicast channel can be implemented as broadcast channel, such as a radio frequency terrestrial channel or high frequency satellite channel.

In an embodiment of the invention, the multicast channel contains not just the media objects, but can contain a complete or partial set of cacheable objects which allows to serve the requests for said media objects, such as complete or partial requests associated with the media objects, and server responses to the client requests including necessary fields and headers, before delivering the actual media objects.

In an embodiment of the invention, the method executes the decision to use the multicast channel for delivering media segments instead of using (default) unicast delivery.

In an alternative embodiment, the default mechanism of delivery in the CDN, i.e., unicast, can be used as a recovery mechanism. That is, the method executes the decision to use multicast channel for delivering media segments but in the case that no media segment is received from the multicast channel, the method returns to the (default) decision of using unicast.

In an exemplary embodiment, once the multicast channel is decided to be used for delivering at least one of the retrieved media segment, the method further comprises receiving the at least one of the retrieved media segment and caching the content at an surrogate server of the CDN.

The order of the method steps is not a critic issue, so other method steps orders are also possible.

In an embodiment of the invention, the step of receiving requests directed to the CDN for media segments comprises receiving requests for said media segments from an surrogate server of the CDN (e.g., from a surrogate server connected to a user terminal requesting the media segments). Receiving requests from a CDN surrogate server comprises receiving reverse-proxy requests which are sent by the surrogate server towards the CDN in reply to client requests reaching the surrogate server.

According to another aspect of the invention a multicaster agent is provided, comprising means for receiving requests for media objects to a CDN and means for communicating with an origin server belonging to CDN to retrieve from the origin server the requested and subsequent media objects associated with a same web resource If a configurable threshold of requests is reached and the media objects have associated a web resource which is enabled to be multicast, the multicaster agent further comprises:
- means for sending a notification from the CDN including response information in order to enable a decision on whether to use multicast channel, associated with the web resource and generated by the multicaster agent by packaging the retrieved media objects, together with other cacheable objects to serve the requests, into the multicast channel 300 , for delivering at least one of the retrieved media objects.

In an embodiment of the invention, the multicaster agent comprises means for receiving reverse-proxy requests for media segments from a CDN surrogate server (e.g. a surrogate server of multimedia contents communicated with the client or user terminal), the reverse-proxy requests being prompted by client requests for said media segments received at the surrogate server.

According to another aspect of the invention a surrogate server is provided, comprising means for receiving client requests for media objects from a user terminal to a CDN and means for communicating through the CDN with a multicaster agent as the one described before. The surrogate server further comprises means for sending reverse-proxy requests for media objects associated with a web resource prompted by the received client requests to an origin agent (e.g., the multicaster agent described before), and means for deciding (decision logic), based on response information received from the origin agent in reply to the reverse-proxy requests, upon whether to use a multicast channel for delivering at least one of the requested media objects. The multicast channel is generated by the multicaster agent and associated with the web resource. This multicast channel has not only the requested media objects but othercacheable objects to serve the requests for media objects.

In an exemplary embodiment, the surrogate server can decide on whether to use the multicast channel based on response information from the multicaster agent containing a multicast group address, channel bit-rates and media segment duration. Additionally, the decision by the surrogate server can take into account network parameters, such as load of caching content means assigned to the web resource, number of client requests or a core network bandwidth.

In an embodiment of the invention, the surrogate server can decide to use multicast channel when at least one of the requested media segment can be retreived from the multicast channel. On the contrary, if no media segments are being received from the multicast channel, the surrogate server can switch the decision and return to use unicast delivering.

The surrogate server further comprises means for retrieving media segments from the multicast channel and caching content means for caching the retrieved media segments.

In an alternative embodiment, the surrogate server comprises means for holding client requests for a configurable time period or until a notification response information is received by the surrogate server and indicates that the media objects are available in a multicast channel.

Another aspect of the invention relates to a system for media content delivery which is a telecommunications network of any known network topology (e.g. ring, mesh, etc.) comprising at least a multicaster agent and surrogate server as the ones above defined.

These and other aspects of the invention will be apparent from and elucidated with reference to the embodiments described hereinafter.

The presented embodiments potentially have the following advantages when compared with the prior art:
- Better scalability and superior manageability of a multicast distribution. The best delivery method, multicast or unicast (HTTP), is ensured by an adaptive selection based on actual demand. Dynamic adaptation to the actual CDN state ensuring that optimal delivery method either unicast or multicast is used based on the load, popularity and other factors.
- Any need for a human intervention is removed, which also achieves less error-prone in suggesting multicast distribution and to be suited for large scaling and online content.
- Localized logic at the surrogate server to join multicast distribution enabling large size scaling and fast adaptation without centralized top-down management.
- It is not protocol specific and can be applied for intelligent cache pre-filling for both live and on-demand content.
- Substantial reducion of uplink network bandwidth from the surrogate servers on multiple levels of hierarchy with the additional advantage of minimising content latency.
- Reduced CDN core bandwidth compared to the traditional point to point (e.g. HTTP GET) segment distribution. CDN bandwidth saving depends on the network topology but are not negligible.
- Improved response time and scalability. The solution distributes a complete set of cacheable objects for serving delivery requests, which removes the need for the surrogate server to acquire requests information and compute responses, such as Cache-Control settings in the response headers for which there is no sufficient information at the surrogate server.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a schematic diagram of Content Delivery Network architecture for multicast cache pre-filling according to an embodiment of the present invention.
Figure 2 shows a schematic diagram of the main steps for multicasting media content in Content Delivery Network according to an embodiment of the present invention.
Figure 3 shows a schematic format of a multicast channel in accordance to an embodiment of the present invention.
Figure 4 shows a schematic diagram of the main steps for delivering media content in Content Delivery Network with multicast cache pre-filling in accordance to an embodiment of the present invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

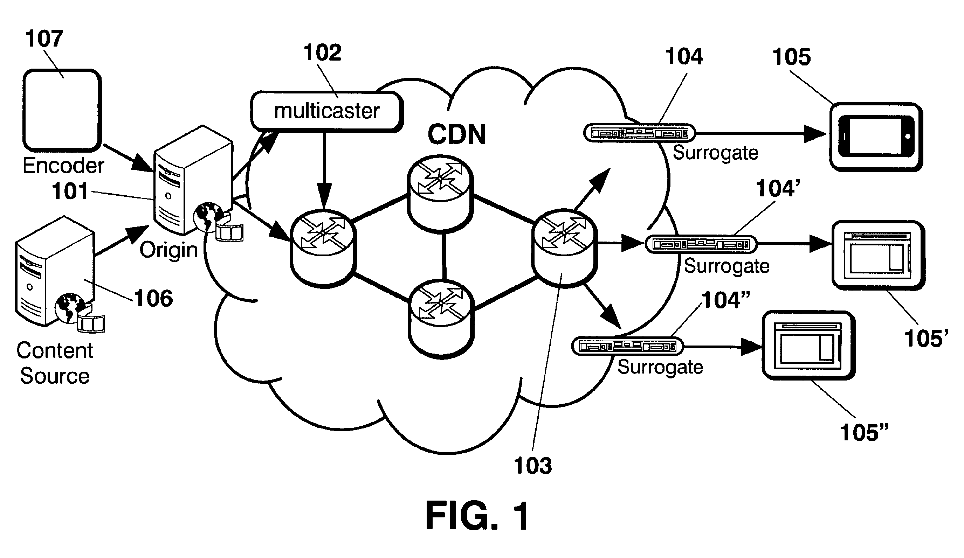

Figure 1 shows a high level diagram of CDN with multicast cache pre-filling. An origin server 101 communicating with a multicaster agent 102 delivers initial copy or copies of media objects through a plurality of routers (103) of a Content Deliver Network CDN to one or more surrogate servers 104, 104', 104", positioned close to the network edgeand which, in turn, deliver the media objects to the user terminals 105, 105', 105". The media objects are acquired by the origin server 101 from a content source node 106 of the internet Content Provider's network or by other means. For example, the origin server 101 can instead acquire media from an encoder 107, which is out of the scope of the present invention, for building media objects with proper data format (e.g., H.264/AAC encoded video).

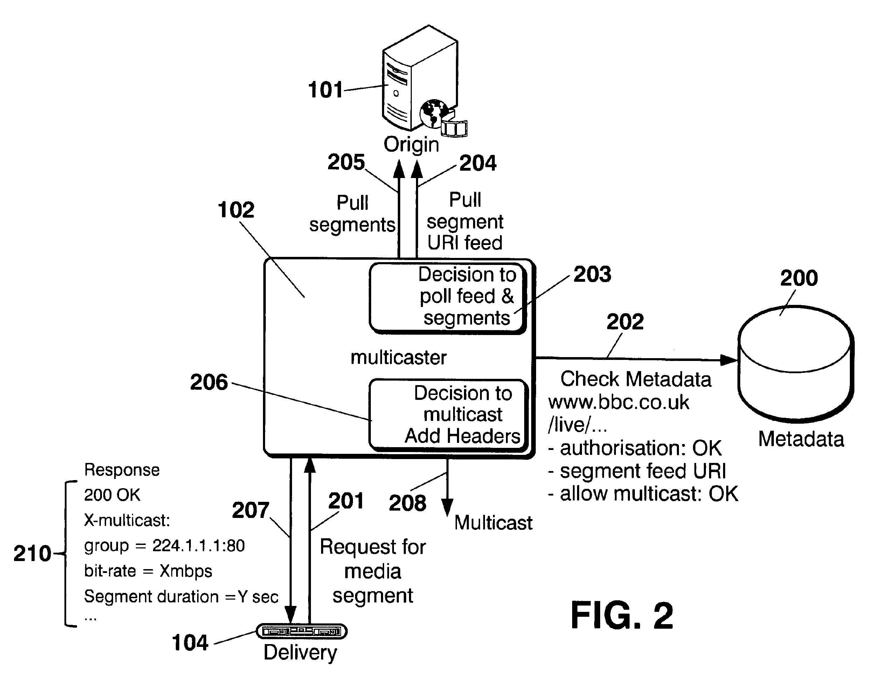

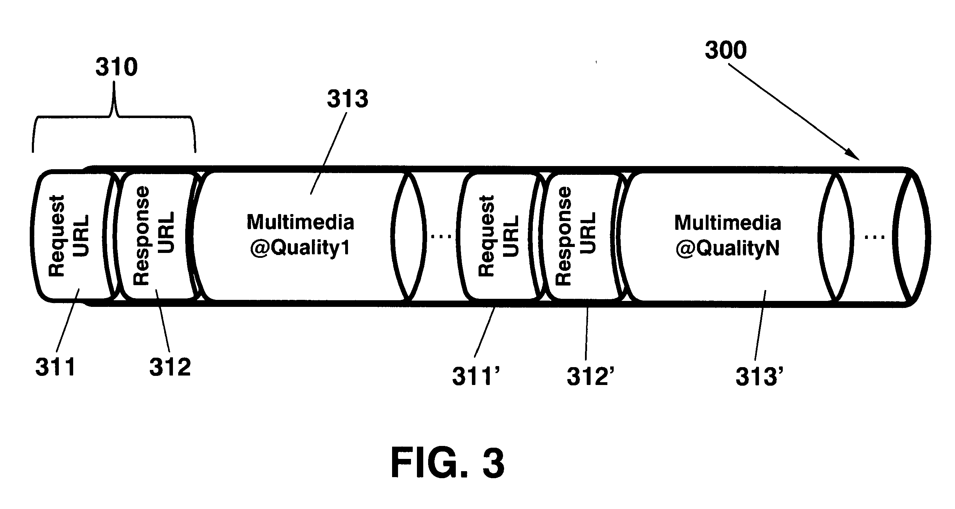

Figure 2 shows an embodiment of the multicaster agent 102. The surrogate server 104 or other CDN node can initially request 201 media segments, e.g., by using HTTP GET method. Multicaster agent 102 monitors requests for content or other WEB resources, e.g. a particular URL path (.../bbc1/live/...) or web site (www.bbc.co.uk). The multicaster agent 102 checks 202 from associated metadata server 200 whether said Web resources, located at the URL path or the WEB site, can be multicast and from what web feed or location segment can be retrieved. If a certain level of requests for said media segments is reached, the multicaster agent 102 makes a number of steps to enable multicast cache pre-filling as follows:
The multicaster agent 102 pro-actively makes the decision to pull 203 for following Uniform Resource Identifiers (URIs) 204, e.g. from a web feed (whose content items include Uniform Resource Links (URLs) to the location of the content objects) and retrieves following media objects 205. The automatic retrieval of media segments is performed by the multicaster agent (102) in sequence and using metadata (web feed) that may come along with the media objects from the origin server 101 or from other network server. Then the retrieved media segments are packaged together 206 into a multicast channel 300 with the headers 310 shown in Figure 3. The multicaster agent 102 associates the multicast channel 300 with the given WEB resources, e.g. URL path '.../bbc1/live/...' or WEB site 'www.bbc.co.uk'. The multicaster agent 102 send a notification 207 to the surrogate server 104 or other CDN nodes about availability of the requested data on a multicast channel 300, which is multicast 208.
   Note that the multicaster agent 102 includes sufficient response information 210 in the notification 207 to enable each surrogate server 104 to make own decision whether to use multicast stream instead of future HTTP GET requests. Such response information 210 can include (but is not limited to) multicast group address (e.g., IP address and port, "X-multicast group: 224.1.1.1:80" in Figure 2), total channel bit-rate, segment duration, etc. This embodiment illustrates data plane notification when special multicast info is inserted into HTTP response to the initial HTTP GET request.
   Note that in order to allow each surrogate server 104 to make own intelligent decision about joining multicast channel 300 based on load, observed demand and other factors, e.g. to optimise core network bandwidth utilization, the surrogate server 104 needs to know which information is being carried on the multicast channel 300 (e.g. live media channel or event) and how it corresponds to the requested URI object. This association is resolved by associating multicast channels 300 with HTTP requests in a number of ways as described in the embodiment, and such association can be communicated to the surrogate server 104 either via metadata configuration or though the data plane:
   - Metadata: URI pattern or WEB site can be pre-configured to map to a multicast group;
   - Data carried over a channel from dataplane: extra information (e.g. HTTP headers) can be inserted to indicate that the content is also available on a multicast group.
Several mechanisms for the propagating of metadata configuration can be applied such as direct queries to metadata server, push notifications, pre-provisioning at the surrogate or other server.

Figure 3 shows an embodiment of format for the multicast channel 300. Note that multicaster agent 102 also includes sufficient information into the multicast channel 300 to enable each surrogate server 104 to serve client requests without need for extra computations. Such information may include WEB HTTP requests 311, 311' (request URLs, which user terminal 105 may use to request the segments), WEB HTTP responses 312, 312' including mandatory response header (response URL and cache control headers, which surrogate server 104 needs to include into the reply to the HTTP requests) and actual media objects 313, 313' (multimedia segments encoded at a certain quality level). Note that media objects 313, 313' belonging to more than single bit-rate variance of adaptive rate streaming may be included into multicast channel 300.

The use of multicast channels 300 (multicast groups) inside CDN containing not only media objects 313, 313', but client requests 311, 311' associated with these segments and server responses312, 312' to these requests before delivering the segments allows CDN surrogate server 104 to act as Web cache - caching content without need to analyze requests and compute responses, which is a limitation of the prior art solution. In essence, the surrogate acquires enough cacheable objects with sufficient information to serve media delivery requests (e.g. HTTP requests for live adaptive rate segments) without the need for extra information or computations. A physical implementation of a multicast channel 300 could be a User Datagram Protocol (UDP) flow, with or without Real Time Protocol (RTP) encapsulation, and may use standard retransmission mechanisms (e.g. RET protocol) for recovery from potential UDP data losses. As discussed above other implementations of broadcast channel are possible, e.g. radio frequency terrestrial channel or high frequency satellite channel.

Such multicast channel 300 with cacheable objects can be used for any CDN surrogate server to pre-fill its own cache for serving future requests. Once cache is pre-filled from the multicast channel 300, the objects in the cache can be treated similarly to other cacheable objects (e.g. HTTP cached objects).

Multicast channels 300 can also be applied for an online CDN in the case that point to multi point distribution such as multicast is not available within the CDN. In this case, streaming of cacheable objects towards downstream caches can be done over a different unicast distribution (e.g. UDP flow). Although such application would not offer all the benefits of the multicast distribution, as it would require more complexity for extra unicast distribution if compared to multicast or default HTTP, it allows some savings in term of downstream bandwidth, avoiding continuous retrieval of live objects.

On the other hand, multicast channels 300 can complement traditional unicast distribution (e.g. using HTTP). The creation of multicast channels 300 is a dynamic process reflecting actual demand for the content. For example, multicaster agent 102 is enabled to decide whether to create multicast channel 300 (e.g. a channel for carrying multiple adaptive rates for BBC1 channel) based on the current demand. The multicaster agent 102 can then indicate to all surrogate servers 104, 104', 104", that the live segments are also available on the multicast channel 300, and multicast 208 media segments together with other cacheable objects (e.g. requests and responses as discussed above). Note that "multicast channel" can be often referred to as "multicast group".

Default unicast HTTP distribution can also be used as a recovery mechanism for multicast distribution. For example, a surrogate server 104 can request media segments 201 using HTTP GET if it cannot continue receiving cacheable objects on a multicast channel 300. An alternative recovery mechanism can be RTP retransmission, such as DVB-IPI RET (RETransmission) technology. The technology is based on unicast delivery of missed segments from a dedicated retransmission server in a network. For example, upon detection of missed or corrupted segments the client can request re-delivery from the retransmission server.

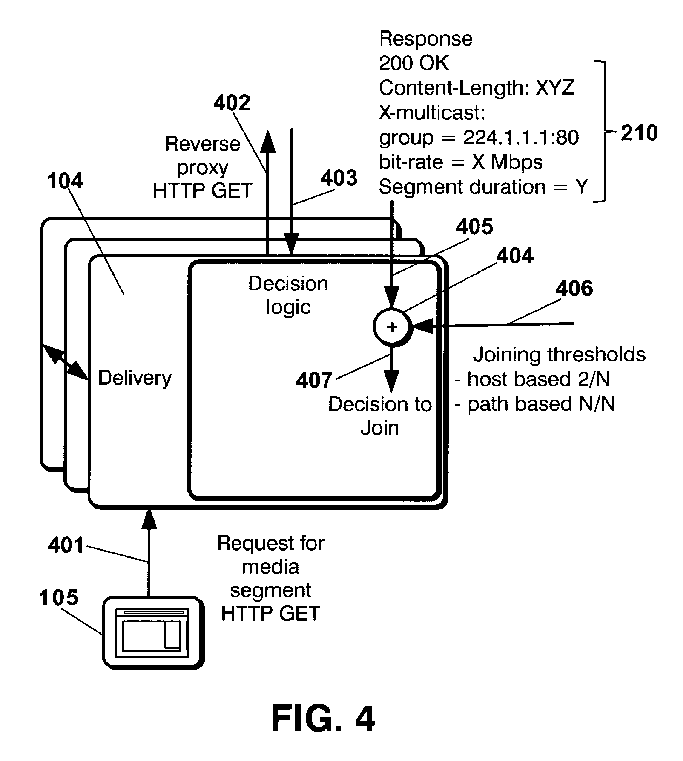

Figure 4 shows an embodiment of the proposed CDN surrogate servers 104, 104', 104". The surrogate server 104 is provided with content caching functionality and with decision logic for multicast cache pre-filling. The surrogate server 104 receives client requests 401 (e.g., using HTTP GET) for media segments and makes reverse-proxy requests 402 upstream to the CDN (also by using HTTP GET), if these media segments are not available from the local cache. Upstream CDN replies 405 with response information 210 identifying that required data for this and the subsequent requests to the same location or path can be acquired 403 from a multicast channel 300 instead. Optionally upstream CDN or Origin server 101 can also return requested media object. In an alternative embodiment, upstream CDN or Origin server 101 can wait for another request from the surrogate server 104 for the same media object to allow the surrogate server 104 to retrieve initially requested media object from multicast stream 300 instead.

As discussed above, either the Origin server 101 or multicaster agent 102 includes sufficient data into the response information 210 to enable the surrogate server 104 using decision logic 404 to make own decision whether to join 407 multicast stream or not (and in the latter case, the surrogate server 104 can keep on requesting media segments using HTTP GET). In the example shown in Figure 3, the inclusion of segment duration and overall bit-rate into the response information 210 indicates to the surrogate server 104 how much proportion of the multichannel stream of cacheable resources it is likely to consume. If the surrogate server 104 plans to consume over a certain level or resources from that stream, it leads the decision logic 404 to join 407 multicast stream instead of using default unicast delivery (continuing with HTTP GETs reverse proxying). For example, the threshold to decide to join 407 multicast stream can be determined by factoring other metadata 406. Such decision logic 404 in the surrogate server 104, for example, can decide to join 407:
- if multicast channel 300 carries A% of media data (media objects) required by the surrogate server 104 for a given web site or host (e.g., 2/N is the proportion of cacheable resources of the multicast channel 300 which is likely to consume);
- Or if multicast channel 300 carries B% of data (media objects) required by the surrogate server 104 for a given path (N/N is the proportion of cacheable resources of the multicast channel 300 which is likely to consume).

A%, B% can be part of metadata 406. Of course, this example is for illustration purposes only and such thresholds can be either statically or adaptively configured, and can be applied per WEB resource.

Once surrogate's cache is pre-filled from the multicast channel 300, the multimedia objects in the cache are treated similarly to other cacheable objects (e.g. HTTP cached objects).

Therefore, the surrogate server 104 is encouraged or prompted to use multicast distribution for cache pre-filling only if future client requests are likely to be satisfied from upcoming multicast content. Optionally, the origin server 101 or upper level surrogate servers can hold incoming unicast requests for a time window until the content is available on multicast channel 300, e.g. in a scenario when an end user terminal 105 requests segments too soon.

If the surrogate server 104 no longer expects or observes high demand for a given WEB resource, e.g. for a given path '.../bbc1/live/...' or site 'www.bbc.co.uk', the surrogate server 104 leaves the multicast stream. Similarly, the multicaster agent 102 periodically checks whether there is still high demand for a given WEB resource. If the demand drops or ceases to exist (e.g. none of the surrogate servers 104, 104', 104" use multicast channel 300), the multicaster agent 102 multicasting cacheable resources for a given WEB resource.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for delivering multimedia in content delivery networks, comprising:
- receiving requests directed to a content delivery network CDN for media objects,
- checking whether the media objects have associated a web resource which is enabled to be multicast,
**characterised in that**, if a configurable threshold of requests is reached, the method further comprising:
- retrieving the requested media objects and subsequent media objects associated with the same web resource,
- retrieving a set of cacheable objects to serve the received requests for media objects,
- packaging the retrieved media objects and cacheable objects into a multicast channel 300,
- associating the multicast channel 300 with the web resource,
- sending a notification 207 from the content delivery network CDN including response information 210 in order to enable a decision on whether to use the multicast channel 300 for delivering at least one of the retrieved media objects.

2. The method for delivering multimedia in content delivery networks according to claim 1, wherein the set of cacheable objects to serve requests for media objects packaged into the multicast channel 300 comprises client requests associated with the media objects and server responses to the client requests including fields and headers.

3. The method for delivering multimedia in content delivery networks according to any previous claim, wherein the decision on whether to use the multicast channel 300 is based on a network parameter being at least one of a load of caching content means assigned to the web resource, a number of client requests or a core network bandwidth.

4. The method for delivering multimedia in content delivery networks according to any previous claim, wherein the response information 210 comprises a multicast group address, channel bit-rate and media object duration.

5. The method for delivering multimedia in content delivery networks according to any previous claim, wherein associating the multicast channel 300 with the web resource comprises checking in a metadata configuration whether the web resource is mapped to a multicast group address.

6. The method for delivering of media content according to any previous claim, wherein associating the multicast channel 300 with the web resource comprises including in the notification 207 from the content delivery network CDN data indicating availability of the retrieved media objects in the multicast channel 300.

7. The method for delivering multimedia in content delivery networks according to any previous claim, wherein retrieving the requested media objects and subsequent media objects associated with the web resource comprises retrieving web feeds which are used to locate the requested media objects and subsequent media objects.

8. The method for delivering multimedia in content delivery networks according to any previous claim, further comprising holding client requests for media objects for a configurable time or until the notification 207 indicates that media objects are available in a multicast channel 300.

9. A multicaster agent (102) for multimedia delivering in content delivery networks, comprising:
- means for receiving requests for media objects directed to a content delivery network CDN,
**characterised in that** the multicaster agent (102) is in communication with an origin server (101) attached to a node of the content delivery network CDN to retrieve from the origin server (101) the requested media objects and subsequent media objects associated with a same web resource and, if a configurable threshold of requests is reached and the media objects have associated a web resource which is enabled to be multicast, the multicaster agent (102) further comprises:
- means for sending a notification 207 from the content delivery network CDN including response information 210 in order to enable a decision on whether to use a multicast channel 300, associated with the web resource and generated by the multicaster agent (102) by packaging the retrieved media objects together with cacheable objects to serve the requests for media objectsinto the multicast channel 300, for delivering at least one of the retrieved media objects.

10. The multicaster agent (102) according to claim 9, which is integrated with the origin server (101) in a same node.

11. The multicaster agent (102) according to any of claims 9-10, wherein the means for sending the notification 207 are adapted to include in the response information 210 a multicast group address, channel bit-rate and media object duration.

12. The multicaster agent (102) according to any claims of 9-11, further comprising means for checking in a metadata configuration whether the web resource is mapped to a multicast group address and, if so, associating the web resource with a multicast channel 300 assigned to the multicast group address.

13. The multicaster agent (102) according to any claims of 9-12, wherein the means for sending the notification 207 are adapted to include in the response information 210 data indicating availability of the retrieved media objects in the multicast channel 300.

14. The multicaster agent (102) according to any claims 9-13, which communicates with the origin server (101) to retrieve from the origin server (101) web feeds which are used to locate the requested media objects and subsequent media objects.

15. A surrogate server (104, 104', 104") for multimedia delivering in content delivery networks comprising:
- means for receiving client requests for media objects from a user terminal (105, 105', 105") directed to a content delivery network CDN,
**characterised in that** surrogate server (104, 104', 104") is in communication through the content delivery network CDN with a multicaster agent (102), and the surrogate server (104, 104', 104") further comprises:
- means for sending reverse-proxy requests for media objects associated with a web resource prompted by the received client requests to the multicaster agent (102),
- means for deciding, based on response information 210 received from the multicaster agent (102) in reply to the reverse-proxy requests, upon whether to use a multicast channel 300, associated with the web resource and generated by the multicaster agent (102), which has the media objects andcacheable objects to serve the requests for media objects packaged into, for delivering at least one of the requested media objects.

16. A system for multimedia content delivery network, comprising a multicaster agent (102) defined according to claims 9-14, which is in communication with at least one surrogate server (104, 104', 104") defined according to claim 15 through a content delivery network CDN.

## Patentansprüche

1. Verfahren für die Bereitstellung von Multimediainhalten in Inhaltbereitstellungsnetzwerken (Content-Delivery-Networks, CDN), umfassend:
- Empfangen von an ein Inhaltbereitstellungsnetzwerk gerichteten Anfragen nach Mediaobjekten,
- Prüfen, ob den Mediaobjekten eine Webressource zugeordnet ist, die für Multicast aktiviert ist,
**dadurch gekennzeichnet, dass** das Verfahren dann, wenn ein konfigurierbarer Sollwert an Anfragen erreicht ist, weiterhin umfasst:
- Abrufen der angeforderten Mediaobjekte und nachfolgenden Mediaobjekte, die derselben Webressource zugeordnet sind,
- Abrufen eines Sets zwischenspeicherbarer Objekte zum Bedienen der erhaltenen Anfragen nach Mediaobjekten,
- Anlegen von Datenpaketen mit den abgerufenen Mediaobjekten und zwischenspeicherbaren Objekten in einem Multicast-Kanal 300,
- Zuordnung des Multicast-Kanals 300 zu der Webressource,
- Senden einer Benachrichtigung 207 einschließlich Antwortinformation 210 aus dem Inhaltbereitstellungsnetzwerk CDN zur Ermöglichung einer Entscheidung darüber, ob der Multicast-Kanal 300 zur Lieferung von zumindest einem der abgerufenen Mediaobjekte benutzt werden soll.

2. Verfahren zur Lieferung von Multimedia in Inhaltbereitstellungsnetzwerken nach Anspruch 1, wobei das Set zwischenspeicherbarer Objekte für das Bedienen von Anfragen nach in den Multicast-Kanal 300 gepackten Mediaobjekten diesen Mediaobjekten zugeordnete Kundenanfragen und Serverantworten auf die Kundenanfragen mit Feldern und Headern umfasst.

3. Verfahren für die Lieferung von Multimedia in Inhaltbereitstellungsnetzwerken nach einem jeglichen der vorgenannten Ansprüche, wobei die Entscheidung darüber, ob der Multicast-Kanal 300 benutzt wird, auf einem Netzwerkparameter beruht und gegeben sein muss, dass mindestens einer aus einer Ladung von Zwischenspeicher-Inhalten der Webressource, einer Anzahl von Kundenanfragen oder einer Kernnetzwerk-Bandbreite zugeordnet ist.

4. Methode für die Bereitstellung von Multimedia in Inhaltbereitstellungsnetzwerken nach einem jeglichen der vorgenannten Ansprüche, wobei die Antwortinformation 210 eine Multicast-Gruppen-Adresse, die Kanal-Bitrate und die Mediaobjekt-Dauer umfasst.

5. Methode für die Bereitstellung von Multimedia in Inhaltbereitstellungsnetzwerken nach einem jeglichen der vorgenannten Ansprüche, wobei die Zuordnung des Multicast-Kanals 300 zur Webressource die Abfrage in der Metadatenkonfiguration umfasst, ob die Webressource auf eine Multicastgruppen-Adresse abgebildet ist.

6. Verfahren für die Bereitstellung von Mediainhalten nach einem jeglichen der vorgenannten Ansprüche, wobei die Zuordnung des Multicast-Kanals 300 zur Webressource umfasst, in die Benachrichtigung 207 des Inhaltbereitstellungsnetzwerks CDN Daten aufzunehmen, welche die Verfügbarkeit abgerufener Mediaobjekte im Multicast-Kanal 300 anzeigen.

7. Verfahren zur Bereitstellung von Multimedia in Inhaltbereitstellungsnetzwerken nach einem jeglichen der vorgenannten Ansprüche, wobei das Abrufen der angeforderten Mediaobjekte und nachfolgenden, der Webressource zugeordneten Mediaobjekte das Abrufen von Webfeeds umfasst, die zur Lokalisierung der angeforderten Mediaobjekte und nachfolgenden Mediaobjekte verwendet werden.

8. Verfahren zur Bereitstellung von Multimedia in Inhaltbereitstellungsnetzwerken nach einem jeglichen der vorgenannten Ansprüche, weiterhin das Aufrechterhalten von Kundenanforderungen von Mediaobjekten für einen konfigurierbaren Zeitraum oder bist zu dem Zeitpunkt umfassend, bis Benachrichtigung 207 anzeigt, dass im Multicast-Kanal 300 Mediaobjekte verfügbar sind.

9. Multicast-Agent (102) für die Bereitstellung von Multimedia in Inhaltbereitstellungsnetzwerken, Folgendes umfassend:
- Mittel für den Empfang von Anforderungen von Mediaobjekten, die an ein Inhaltbereitstellungsnetzwerk CDN gerichtet sind,
**dadurch gekennzeichnet, dass** der Multicast-Agent (102) in Kommunikation mit einem an einen Knoten des Inhaltbereitstellungsnetzwerks CDN angefügten Quellserver (101) steht, um vom Quellserver (101) die derselben Webressource zugeordneten, angeforderten Mediaobjekte und nachfolgenden Mediaobjekte abzurufen, wenn ein konfigurierbarer Sollwert von Anfragen erreicht wird und den Mediaobjekten eine für Multicast aktivierte Webressource zugeordnet ist, wobei der Multicast-Agent (102) weiterhin umfasst:
- Mittel für das Senden einer Antwortinformation 210 enthaltenden Benachrichtigung 207 vom Inhaltbereitstellungsnetzwerk CDN zum Ermöglichen einer Entscheidung darüber, ob ein Multicast-Kanal 300 benutzt werden soll, der einer Webressource zugeordnet ist und vom Multicast-Agenten (102) durch das Bilden von Datenpaketen mit den abgerufenen Mediaobjekten zusammen mit zwischenspeicherbaren Objekten generiert wird, um die Anforderungen von Mediaobjekten in den Multicast-Kanal 300 einzuspeisen, damit mindestens eines der abgerufenen Mediaobjekte bereitgestellt wird.

10. Multicast-Agent (102) nach Anspruch 9, der im selben Knoten in den Quellserver (101) integriert wird.

11. Multicast-Agent (102) nach einem jeglichen der Ansprüche 9 - 10, wobei die Mittel für das Senden der Benachrichtigung 207 angepasst werden, damit sie in die Antwortinformation 210 eine Multicast-Gruppen-Adresse, die Kanal-Bitrate und eine Mediaobjekt-Dauer aufnehmen.

12. Multicast-Agent (102) nach einem jeglichen der Ansprüche 9 - 11, weiterhin Mittel umfassend, um in einer Metadatenkonfiguration zu prüfen, ob die Webressource auf eine Multicast-Gruppen-Adresse abgebildet ist, und, wenn dies der Fall ist, die Webressource einem Multicast-Kanal 300 zuzuordnen, welcher der Multicast-Gruppen-Adresse zugewiesen ist.

13. Multicast-Agent (102) nach einem jeglichen der Ansprüche 9 - 12, wobei die Mittel für das Senden der Benachrichtigung 207 angepasst werden, damit sie in die Antwortinformation 210 Daten zur Verfügbarkeit der abgerufenen Mediaobjekte im Multicast-Kanal 300 aufnehmen.

14. Multicast-Agent (102) nach einem jeglichen der Ansprüche 9 -13, der mit dem Quellserver (101) kommuniziert, um vom Quellserver (101) Webfeeds abzurufen, die zur Lokalisierung der angeforderten Media-Objekte und nachfolgenden Media-Objekte verwendet werden.

15. Surrogat-Server (104, 104', 104") für die Bereitstellung von Multimedia in Inhaltbereitstellungsnetzwerken, Folgendes umfassend:
- Mittel für den Empfang von Kundenanforderungen von Mediaobjekten von einem Benutzerendgerät (105, 105', 105") an ein Inhaltbereitstellungsnetzwerk CDN,
**dadurch gekennzeichnet, dass** der Surrogat-Server (104, 104', 104") über das Inhaltbereitstellungsnetzwerk CDN in Kommunikation mit einem Multicast-Agenten (102) steht und der Surrogat-Server (104, 104', 104") weiterhin umfasst:
- Mittel für das Senden von Reverse-Proxy-Anfragen nach Mediaobjekten, die durch die empfangene Kundenanforderungen an den Multicast-Agenten (102) einer Webressource zugeordnet sind.
- Mittel, um auf der Grundlage der vom Multicast-Agenten (102) als Antwort auf die Reverse-Proxy-Anfragen empfangene Antwortinformation 210 zu entscheiden, ob ein Multicast-Kanal 300 zu benutzen ist, der einer Webressource zugeordnet ist und vom Multicast-Agenten (102) generiert wird, der als Datenpaket die Mediaobjekte und zwischenspeicherbaren Objekte zum Bedienen der Anforderungen von Mediaobjekten enthält, um mindestens eines der angeforderten Mediaobjekte bereitzustellen.

16. Ein System für ein Inhaltbereitstellungsnetzwerk, bestehend aus einem Multicast-Agenten (102), definiert nach den Ansprüchen 9 - 14, der über ein Inhaltbereitstellungsnetzwerk CDN in Kommunikation mit mindestens einem nach Anspruch 15 definierten Surrogat-Server (104, 104', 104") steht.

## Revendications

1. Procédé pour délivrer du multimédia dans des réseaux de livraison de contenu, comprenant les étapes suivantes :
- recevoir des demandes adressées à un réseau de livraison de contenu CDN pour des objets médias,
- vérifier si les objets médias ont associé une ressource web qui est autorisée à être multidiffusée,
**caractérisé en ce que**, si un seuil configurable de demandes est atteint, le procédé comprenant en outre les étapes suivantes :
- récupérer les objets médias demandés et les objets médias subséquents associés à la même ressource web,
- récupérer un ensemble d'objets antémémorisables pour prendre en charge les demandes reçues pour des objets médias,
- emballer les objets médias et les objets antémémorisables récupérés dans un canal de multidiffusion 300,
- associer le canal de multidiffusion 300 à la ressource web,
- envoyer une notification 207 à partir du réseau de livraison de contenu CDN incluant des informations de réponse 210 afin de permettre une décision sur l'utilisation ou non du canal de multidiffusion 300 pour délivrer au moins un des objets médias récupérés.

2. Procédé pour délivrer du multimédia dans des réseaux de livraison de contenu selon la revendication 1, dans lequel l'ensemble d'objets antémémorisables pour prendre en charge des demandes pour des objets médias emballés dans le canal de multidiffusion 300 comprend des demandes de client associées aux objets médias et des réponses de serveur aux demandes de client incluant des champs et des en-têtes.

3. Procédé pour délivrer du multimédia dans des réseaux de livraison de contenu selon l'une quelconque des revendications précédentes, dans lequel la décision sur si utiliser le canal de multidiffusion 300 est basée sur un paramètre de réseau qui est au moins un parmi une charge de moyens de contenu de mise en antémémoire assignés à la ressource web, un nombre de demandes de client ou une largeur de bande de réseau coeur.

4. Procédé pour délivrer du multimédia dans des réseaux de livraison de contenu selon l'une quelconque des revendications précédentes, dans lequel les informations de réponse 210 comprennent une adresse de groupe de multidiffusion, un débit binaire de canal et une durée d'objet média.

5. Procédé pour délivrer du multimédia dans des réseaux de livraison de contenu selon l'une quelconque des revendications précédentes, dans lequel l'association du canal de multidiffusion 300 à la ressource web comprend la vérification dans une configuration de métadonnées de si la ressource web est mappée avec une adresse de groupe de multidiffusion.

6. Procédé pour délivrer du contenu média selon l'une quelconque des revendications précédentes, dans lequel l'association du canal de multidiffusion 300 à la ressource web comprend l'inclusion dans la notification 207 en provenance du réseau de livraison de contenu CDN de données indiquant la disponibilité des objets médias récupérés dans le canal de multidiffusion 300.

7. Procédé pour délivrer du multimédia dans des réseaux de livraison de contenu selon l'une quelconque des revendications précédentes, dans lequel la récupération des objets médias demandés et d'objets médias subséquents associés à la ressource web comprend la récupération de fils web qui sont utilisés pour localiser les objets médias demandés et des objets médias subséquents.

8. Procédé pour délivrer du multimédia dans des réseaux de livraison de contenu selon l'une quelconque des revendications précédentes, comprenant en outre le maintien de demandes de client pour des objets médias pendant un temps configurable ou jusqu'à ce que la notification 207 indique que des objets médias sont disponibles dans un canal de multidiffusion 300.

9. Agent multidiffuseur (102) pour délivrer du multimédia dans des réseaux de livraison de contenu, comprenant :
- moyens pour recevoir des demandes pour des objets médias adressées à un réseau de livraison de contenu CDN,
**caractérisé en ce que** l'agent multidiffuseur (102) est en communication avec un serveur d'origine (101) rattaché à un noeud du réseau de livraison de contenu CDN pour récupérer à partir du serveur d'origine (101) les objets médias demandés et des objets médias subséquents associés à une même ressource web et, si un seuil configurable de demandes est atteint et que les objets médias ont associé une ressource web qui est autorisée à être multidiffusée, l'agent multidiffuseur (102) comprend en outre :
- moyens pour envoyer une notification 207 à partir du réseau de livraison de contenu CDN incluant des informations de réponse 210 afin de permettre une décision sur si utiliser un canal de multidiffusion 300, associé à la ressource web et généré par l'agent multidiffuseur (102) en emballant les objets médias récupérés conjointement avec des objets antémémorisables pour prendre en charge les demandes pour des objets médias dans le canal de multidiffusion 300, pour délivrer au moins un des objets médias récupérés.

10. Agent multidiffuseur (102) selon la revendication 9, qui est intégré avec le serveur d'origine (101) dans un même noeud.

11. Agent multidiffuseur (102) selon l'une quelconque des revendications 9 à 10, dans lequel les moyens pour envoyer la notification 207 sont adaptés pour inclure dans les informations de réponse 210 une adresse de groupe de multidiffusion, un débit binaire de canal et une durée d'objet média.

12. Agent multidiffuseur (102) selon l'une quelconque des revendications de 9 à 11, comprenant en outre des moyens pour vérifier dans une configuration de métadonnées si la ressource web est mappée avec une adresse de groupe de multidiffusion et, si oui, associer la ressource web à un canal de multidiffusion 300 assigné à l'adresse de groupe de multidiffusion.

13. Agent multidiffuseur (102) selon l'une quelconque des revendications 9 à 12, dans lequel les moyens pour envoyer la notification 207 sont adaptés pour inclure dans les informations de réponse 210 des données indiquant la disponibilité des objets médias récupérés dans le canal de multidiffusion 300.

14. Agent multidiffuseur (102) selon l'une quelconque des revendications 9 à 13, qui communique avec le serveur d'origine (101) pour récupérer à partir du serveur d'origine (101) des fils web qui sont utilisés pour localiser les objets médias demandés et des objets médias subséquents.

15. Serveur de substitution (104, 104', 104") pour délivrer du multimédia dans des réseaux de livraison de contenu comprenant :
- moyens pour recevoir des demandes de client pour des objets médias en provenance d'un terminal d'utilisateur (105, 105', 105") adressées à un réseau de livraison de contenu CDN,
**caractérisé en ce que** le serveur de substitution (104, 104', 104") est en communication par le biais du réseau de livraison de contenu CDN avec un agent multidiffuseur (102), et le serveur de substitution (104, 104', 104") comprend en outre :
- moyens pour envoyer des demandes de mandataire inverse pour des objets médias associés à une ressource web sollicitées par les demandes de client reçues à l'agent multidiffuseur (102),
- moyens pour décider, sur la base d'informations de réponse 210 reçues de l'agent multidiffuseur (102) en réponse aux demandes de mandataire inverse, de si utiliser un canal de multidiffusion 300, associé à la ressource web et généré par l'agent multidiffuseur (102), qui a les objets médias et les objets antémémorisables pour prendre en charge les demandes pour des objets médias emballés dedans, pour délivrer au moins un des objets médias demandés.

16. Système pour un réseau de livraison de contenu multimédia, comprenant un agent multidiffuseur (102) défini selon les revendications 9 à 14, qui est en communication avec au moins un serveur de substitution (104, 104', 104") défini selon la revendication 15 par le biais d'un réseau de livraison de contenu CDN.
